Europäisches Patentamt

European Patent Office

Office européen des brevets

(11) Veröffentlichungsnummer : **0 094 103**
**B1**

(12) # EUROPÄISCHE PATENTSCHRIFT

(45) Veröffentlichungstag der Patentschrift :
16.04.86

(21) Anmeldenummer : 83105495.2

(22) Anmeldetag : 01.02.82

(60) Veröffentlichungsnummer der früheren Anmeldung
nach Art. 76 EPÜ : 0057887

(51) Int. Cl.⁴ : **B 65 D 45/16**, G 01 F 19/00,
B 65 D 55/02

(54) **Kindergesicherter Messbecher.**

(30) Priorität : 09.02.81 DE 3104453

(43) Veröffentlichungstag der Anmeldung :
16.11.83 Patentblatt 83/46

(45) Bekanntmachung des Hinweises auf die Patenterteilung : 16.04.86 Patentblatt 86/16

(84) Benannte Vertragsstaaten :
AT BE CH DE FR GB IT LI LU NL SE

(56) Entgegenhaltungen :
DE-B- 1 066 482
US-A- 2 921 707
US-A- 3 698 543
US-A- 3 713 622
US-A- 4 275 485

(73) Patentinhaber : **Henkel Kommanditgesellschaft auf
Aktien
Postfach 1100 Henkelstrasse 67
D-4000 Düsseldorf-Holthausen (DE)**

(72) Erfinder : **Künzel, Werner
Eichenfeldstrasse 65
D-4018 Langenfeld (DE)**
Erfinder : **Vlerkötter, Peter
Sperberweg 7
D-5090 Leverkusen (DE)**
Erfinder : **Meyer, Klaus
Zum Zörr 19
D-4040 Neuss 1 (DE)**

## Beschreibung

Die Erfindung betrifft einen Meßbecher in Form eines Beutelverschlusses, welcher aus einer auf den zusammengerafften Beutelhals zu setzenden Klammer mit zwei zangenartig gegeneinander zu bewegenden sowie durch ein Scharnier an einer Klammerschmalseite zusammengehaltenen Klemmbacken besteht, wobei die Klemmbacken mit Abstand von dem Scharnier eine beim Schließen der Klammer einrastende und durch Druck in einer etwa senkrecht zur Öffnungsrichtung verlaufenden Richtung zu öffnende Arretierung aufweisen.

Beutel zum Verpacken pulverförmiger Reinigungsmittel werden häufig in eine — in der Regel gesondert zu verschließende — Trommel gesetzt und innerhalb derselben mit einer Klammer bzw. einem sogenannten Klipp verschlossen. Für den Fall, daß im Beutel enthaltene gefährliche Füllgüter gegenüber Kindern besonders gefährdeter Altersgruppen entgegen der Gebrauchsabsicht unzugänglich gemacht werden sollen, sind Kindersicherungen für den wiederverschließbaren Trommeldeckel bereits vorgeschlagen worden. Da solche kindergesicherten Trommeldeckel relativ umständlich zu handhaben sind, besteht die Gefahr, daß der Verbraucher den Deckel nach dem ersten Öffnen gar nicht mehr benutzt sondern lediglich den das jeweilige Produkt unmittelbar enthaltenden Beutel selbst mit einem mitgelieferten Klipp verschließt. Auch, wenn aber der Beutel auf diese Weise ordnungsgemäß wieder verschlossen wird, stellt ein herkömmlicher Klipp in keiner Weise einen Schutz gegenüber dem Zugriff für Kinder dar, da sich übliche Klammern leicht öffnen lassen.

Ein derartiger Klipp ist bekannt aus US-A-3 713 622.

Weiterhin offenbart US-A-2 921 707 eine Kombination eines Schraubverschlusses mit einer Dosierhilfe für eine Flasche. Die Anordnung ist dergestalt getroffen, daß der eigentliche Schraubverschluß eine angeformte oder separate Handhabe besitzt, so daß die Konstruktion leicht in Füllstellung gehalten werden kann. Der Verschlußhohlraum zeigt eine Volumenmarkierung.

Ein kindersicherer Verschluß für einen Behälter ist weiterhin Gegenstand von US-A-3 698 543. Dabei kann das eigentliche Verschlußorgan vermittels eines von außen nicht sichtbaren Elementes mit der Behälteröffnung abgehebelt werden. Dies ist wiederum auch nur möglich, wenn zuvor ein Finger in eine Behälteröffnung eingeführt wird, an deren Ende das Element angeordnet ist. Das Element ist seinerseits an den Behälter beweglich angeformt.

Der Erfindung liegt die Aufgabe zugrunde, einen als Beutelverschluß geeigneten Meßbecher zu schaffen, der im Sinne der entsprechenden Norm als kindergesichert und wiederverschließbar anzusehen ist. Die erfindungsgemäße Lösung besteht in der anspruchsgemäßen Ausgestaltung, wobei zweckmäßige Weiterbildungen die Gegenstände der Unteransprüche bilden.

Durch die Erfindung wird erreicht, daß die den Meßbecher bildende, vorzugsweise langgestreckte Klammer nur zu öffnen ist, indem praktisch gleichzeitig ein Druck in einer Richtung senkrecht zur Drehachse des Scharniers, d. h. insbesondere in der Klammer-Längsrichtung und ein Zug in der Öffnungsrichtung ausgeübt werden.

Eine zusätzliche Sicherung im Sinne eines kindergesicherten Verschlusses wird erzielt, wenn die zum Öffnen der Arretierung zu umgreifende Länge der Klammer die durchschnittliche Spannweite und/oder die dabei aufzubringende Kraft die durchschnittliche Kraft der Hand eines bis zu etwa vier Jahre alten Kindes, d. h. eines Kindes im besonders gefährdeten Alter, übersteigt. Die Richtung der zum Öffnen der Sicherung erforderlichen Kraft verläuft dabei von außen nach innen etwa radial der Scharnierdrehachse zu.

Der erfindungsgemäße Meßbecher besteht zunächst aus einer Kunststoffklammer mit einem Scharnier und einer diesem gegenüberliegenden Arretierung. Zum Schließen kann die Klammer zangenartig so zusammengedrückt werden, daß sie an einer Stelle, zum Beispiel gegenüber dem Scharnier, einrastet. Durch Umfassen der Klammer in ihrer Längsrichtung und Druckausübung auf den Arretierungsbereich ausgeübt läßt sich die Klammer öffnen. Die Funktion der Kindersicherung wird im letzteren Falle also gewährleistet durch den Kraftaufwand beim Drücken und/oder durch die Länge der Klammer bzw. Klemmbacken in Abhängigkeit von der Spannweite einer Kinderhand bis zur Grenze des gefährdeten Alters von etwa 42 bis 51 Monaten.

Beim Verschließen eines Beutels wird dieser in seinem oberen, offenen Bereich in die geöffnete Klammer zwischen Scharnier und Arretierung gelegt und die Klemmbacken dann bis zum Einrasten der Arretierung zugedrückt. Dabei können die das beispielsweise aus Polyäthylen bestehende Material des Beutels umfassenden Teile bzw. Backen der Klammer einseitig oder doppelseitig an ihren Berührungskanten gezahnt oder auf andere Art griffig ausgebildet sein, wobei Ober- und Unterteil der Klammerkanten teilweise ineinandergreifen können. Ein mit einer solchen, arrétierten Klammer umfaßter Beutelhals läßt sich ohne gewaltsame Zerstörung nicht aus dem Verschluß herausziehen. Ein zusätzlicher Vorteil des erfindungsgemäßen Meßbechers besteht also darin, daß auch ein versehentliches Öffnen der Klammer oder eine Lockerung der Verbindung zwischen Klammer und Beutelhals wegen der Arretierung nicht auftreten können.

Bei dem erfindungsgemäßen Meßbecher sind eine oder beide Backen des Verschlusses als Schalen, insbesondere mit vorgegebenem Dosiervolumen ausgebildet. Bei der Dosenform läßt sich die Klammer im geöffneten Zustand zum Schöpfen und Dosieren des jeweils im Beutel enthaltenen Produkts verwenden. Der der Packung normalerweise beigegebene Meßbecher kann dann entfallen. Die eine Halbschale der geöffneten Klammer wird als Schaufel und die andere als deren Griff ausgebildet bzw. verwendet. Der erfindungsgemäße Meßbecher ist also ohne besonderen Aufwand gezielt als Zugabeartikel der jeweiligen Packung zu verwenden.

Eine im vorstehenden Sinne besonders günstige und die Sicherheitsforderung außerordentlich gut erfüllende Ausbildung des Meßbechers ergibt sich, wenn gemäß noch weiterer Erfindung die Außenseite der einen Klemmbacke ein Seitenwandteil eines Meßbechers bildet und dabei das Scharnier im Bereich einer Kante der Becheröffnung an den Körper des Meßbechers angesetzt ist. Insbesondere soll hierbei der Meßbecher zwei durch eine in etwa parallel zu der als feste Klemmbacke ausgebildeten Seitenwand verlaufenden Trennwand abgeteilte Kammern aufweisen, und es soll die an die feste Klemmbacke angrenzende Kammer im Bodenbereich eine durch die äußere Seitenwand führende Öffnung zum Eintauchen oder Einrasten eines an die andere bzw. schwenkbare Klemmbacke angesetzten Querstegs besitzen. Die Kindersicherung wird dabei besonders wirksam, wenn die mit der Öffnung für den Quersteg ausgestattete Kammer eine solche Tiefe und Weite besitzt, daß ein Finger eines bis zu vier Jahre alten Kindes nicht an den in die Kammer hineinragenden Quersteg heranreicht, aber der Quersteg mit dem Finger einer Erwachsenenhand zu betätigen bzw. auzuklinken ist.

Anhand der schematischen Darstellung eines Ausführungsbeispiels wird die Erfindung näher erläutert. Es zeigen :

Figur 1 einen Längsschnitt durch einen Meßbecher mit angesetztem Meßbecher ;

Figur 2 den Meßbecher nach Fig. 3 mit eingerasteter Klappe ;

Figur 3 einen Querschnitt durch die Anordnung nach Fig. 4 ;

Figur 4 einen Schnitt längs der Linie A-B von Fig. 5 ;

Figur 5 einen Meßbecher mit eingeklemmtem Beutel ;

Figur 6 einen Meßbecher mit einer Klemmbacke mit gezahntem Rand ; und

Figur 7 ineinanderzustapelnde Meßbecher mit angesetztem Beutelverschluß.

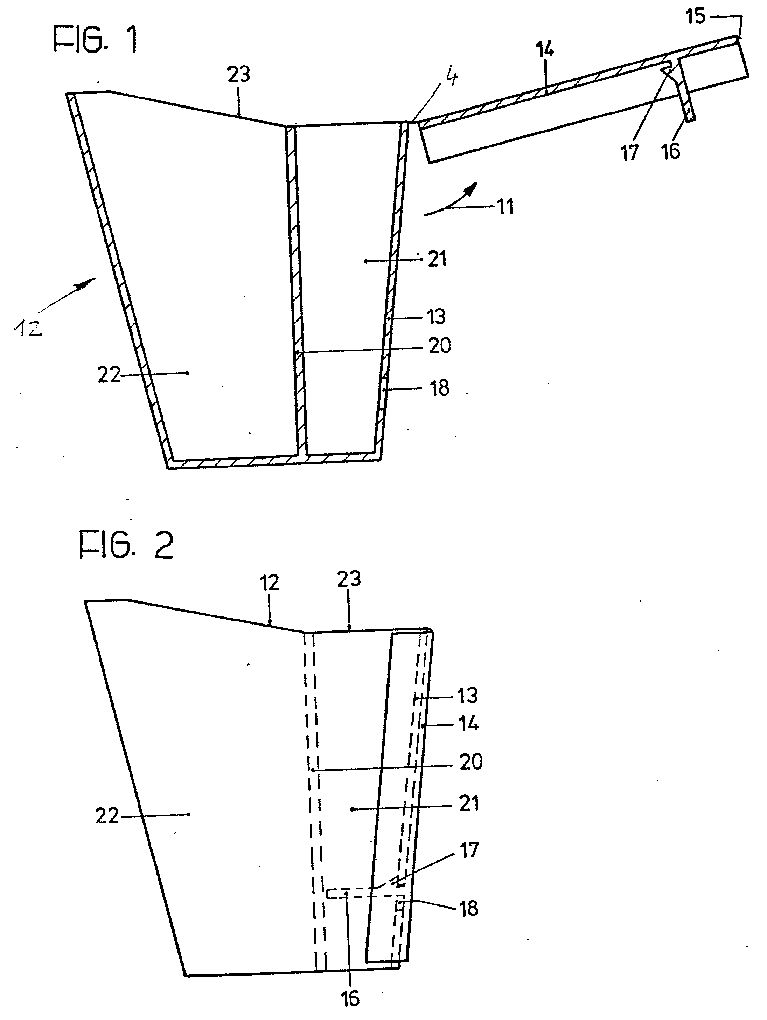

Bei dem anhand der Fig. 1 bis 7 beschriebenen Ausführungsbeispiel wird eine mit einem insgesamt mit 12 bezeichneten Meßbecher integrierte feste Klemmbacke 13 einer schwenkbaren Klemmbacke 14 gegenübergestellt.

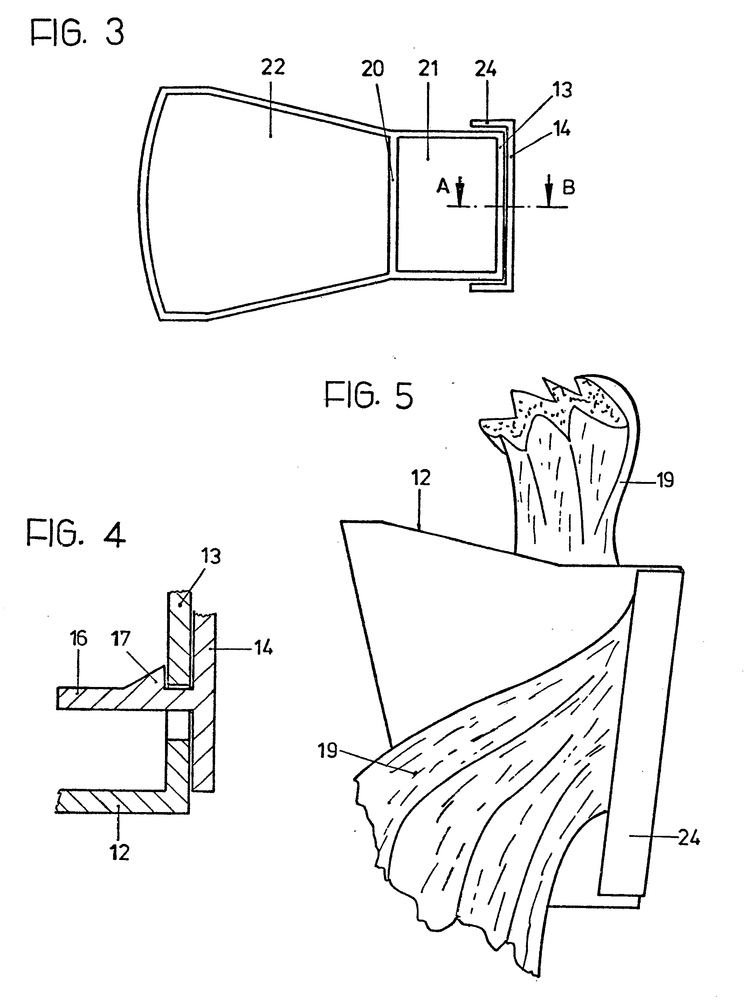

Die feste Klemmbacke 13 bildet dabei im wesentlichen zugleich eine Seitenwand des Meßbechers 12. Das Scharnier 4, bei dem es sich um ein Filmscharnier handeln kann, wird vorzugsweise im Bereich einer Kante der Becheröffnung an den Meßbecher 12 angesetzt. Zweckmäßig sitzt das Scharnier 4 der Schüttkante des Meßbechers 12 gegenüber, um beim Schütten nicht zu stören. Die schwenkbare Klemmbacke 14, die auch als angelenkte Klappe zu bezeichnen ist, besitzt vorzugsweise im Bereich ihres freien Längsendes 15 einen Quersteg 16 mit Arretierungsnase 17. Der Quersteg 16 mit angesetzter Arretierungsnase 17 wird so ausgebildet, daß er in eine Öffnung 18 eintauchen und einrasten kann, welche in der der festen Klemmbacke 13 entsprechenden Seitenwand des Meßbechers 12 vorzusehen ist. Die eingerastete Stellung ist für die Gesamtansicht des Querschnitts in Fig. 2 und als Ausschnitt in Fig. 4 schematisch dargestellt. Ein Schnitt senkrecht zur Darstellung von Fig. 4 wird in Fig. 3 gezeigt. Aus Fig. 5 geht hervor, wie ein Beutel, zum Beispiel aus Polyäthylen, durch Einrasten der schwenkbaren Klemmbacke 14 zu verschließen und mit dem Meßbecher 12 zu verbinden ist.

Im Ausführungsbeispiel weist der Meßbecher 12 zwei durch eine in etwa parallel zu der als Klemmbacke 13 ausgebildeten Seitenwand verlaufende Trennwand 20 abgeteilte Kammern 21, 22 auf. Dabei soll die an die feste Klemmbacke 13 angrenzende, in der Regel kleinere Kammer 21 im Bodenbereich die durch die äußere Seitenwand führende, zum Eintauchen und Einrasten des an die schwenkbare Klemmbacke 14 angesetzten Querstegs 16 vorgesehene Öffnung 18 besitzen. Die andere Kammer 22 wird zweckmäßig als Dosierkammer im engeren Sinne ausgebildet.

Für das kindergesicherte Verschließen des Beutels 19 (Fig. 5) wird dieser in seinem oberen Bereich zusammengerafft und zwischen Meßbecher 12 und schwenkbarer Klemmbacke 14 gelegt. Dann wird letztere nach unten, d. h. in Richtung auf die feste Klemmbacke 13, gedrückt.

Dabei taucht der Quersteg 16 in die im Bodenbereich der kleineren Kammer 21 vorgesehene Aussparung bzw. Öffnung 18 ein und arretiert mit Hilfe der Nase 17 durch Einschnappen. Der Beutel 19 ist damit verschlossen, und der Meßbecher 12 bleibt Bestandteil des Beutelverschlusses. Zum Öffnen des letzteren wird der in die kleinere Kammer 21 des Meßbechers 12 eingedrückte Quersteg 16 durch Fingerdruck nach unten, d. h. radial nach außen in Bezug auf die Drehachse des Scharniers 4, so bewegt, daß die Arretierungsnase 17 ausgeklinkt wird und die angelenkte Klappe bzw. die schwenkbare Klemmbacke 14 abzuschwenken ist.

Die Kindersicherung besteht bei diesem Ausführungsbeispiel im wesentlichen darin, daß der mit einem Finger zu betätigende bzw. herabzudrückende Quersteg 16 durch einen Kinderfinger nicht zu erreichen ist. Natürlich muß aber der Abstand zwischen der oberen Öffnung 23 des Meßbechers 12 und dem Quersteg 16 so bemessen sein, daß er mit dem Finger einer Erwachsenenhand zu betätigen bzw. auszuklinken ist. Durch die Erfindung wird also ein Meßbecher mit integriertem kindergesicherten Beutelverschluß geschaffen. Dieser Meßbecher ermöglicht ein Dosieren des jeweiligen Produkts auf herkömmliche Weise und gewährleistet darüber hinaus ein kindergesichertes Verschließen eines Beutels und damit zugleich ein Aufbewahren des Bechers an einer für das Wiederfinden zum Gebrauch sehr günstigen Stelle. Die mit dem Meßbecher gekoppelte schwenkbare Klemmbacke 14 kann mit dem in ihrem unteren Bereich senkrecht zu ihr verlaufenden Quersteg 16 in einem Teil gespritzt werden. Zum Erzielen einer ausreichenden Materialelastizität am Scharnier 4 und am Quersteg 16 wird die Verwendung von elastischen Kunststoffen, wie Polypropylen, bevorzugt.

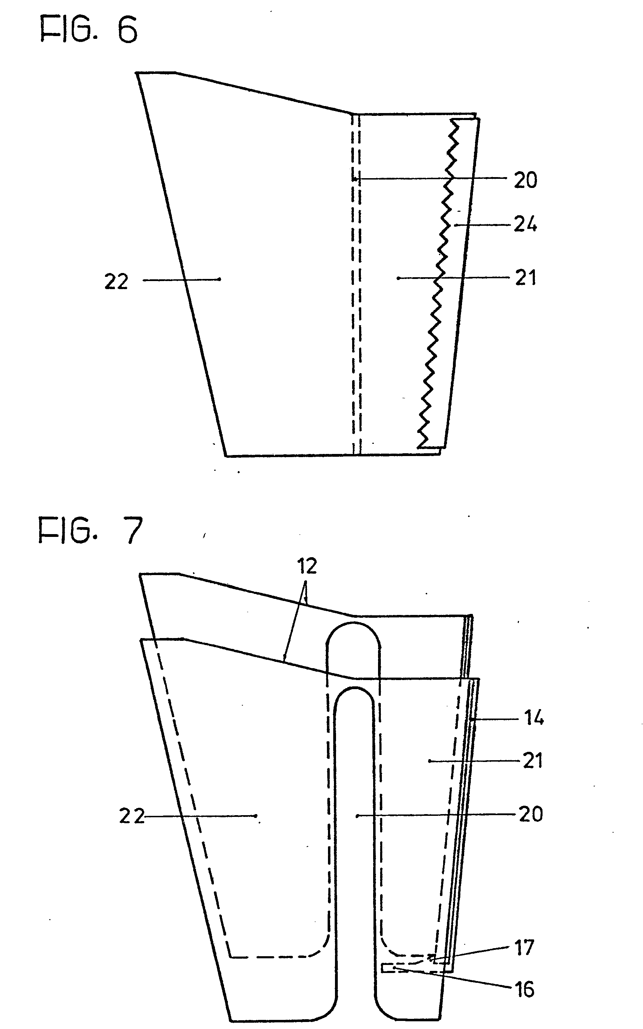

Es kann zweckmäßig sein, die schwenkbare Klemmbacke 14 nach Fig. 3 und 6 mit über die Außenwände der angrenzenden Kammer 21 übergreifenden, insbesondere gezahnten, Randstreifen 24 zu versehen. Vorteilhaft erhält der Beutelverschluß nach Fig. 7 eine ein Ineinanderstapeln ermöglichende Formgebung der Kammern 21, 22 mit angesetzter Klammer bzw. Klemmbackenanordnung.

## Patentansprüche

1. Meßbecher in Form eines Beutelverschlusses, welcher aus einer auf den zusammengerafften Beutelhals zu setzenden Klammer (12) mit zwei zangenartig gegeneinander zu bewegenden sowie durch ein Scharnier (4) an einer Klammerschmalseite zusammengehaltenen Klemmbacken (13, 14) besteht, wobei die Klemmbacken (13, 14) mit Abstand von dem Scharnier (4) eine beim Schließen der Klammer (12) einrastende und durch Druck in einer etwa senkrecht zur Öffnungsrichtung (11) verlaufenden Richtung zu öffnende Arretierung (17, 18) aufweisen, dadurch gekennzeichnet, daß eine oder beide Backen (13, 14) als Dosierschalen, insbesondere mit vorgegebenem Dosiervolumen ausgebildet sind, wobei die mit der Öffnung (18) für den Quersteg (16) ausgestattete Kammer (21) eine solche Weite und Tiefe besitzt, daß ein Finger eines bis zu etwa vier Jahre alten Kindes nicht an den im verschlossenen Zustand in die Kammer (21) hineinragenden Quersteg (16) heranreicht, aber der Quersteg (16) mit einem Finger einer Erwachsenenhand zu betätigen bzw. auszuklinken oder herabzudrücken ist.

2. Meßbecher nach Anspruch 1, dadurch gekennzeichnet, daß die eine Klemmbacke als Schale und die andere als zugehöriger Griff ausgebildet ist.

3. Meßbecher nach Anspruch 1 oder 2, dadurch gekennzeichnet, daß die Außenseite der einen, festen Klemmbacke (13) ein Seitenwandteil eines Meßbechers (12) bildet und daß das Scharnier (4) im Bereich einer Kante der Becheröffnung (25) an den Meßbecher (12) angesetzt ist.

4. Meßbecher nach Anspruch 3, dadurch gekennzeichnet, daß der Meßbecher (12) zwei durch eine in etwa parallel zu der als feste Klemmbacke (13) ausgebildeten Seitenwand verlaufende Trennwand (20) abgeteilte Kammern (21, 22) aufweist und daß die an die feste Klemmbacke (13) angrenzende, insbesondere kleinere Kammer (21) im Bodenbereich eine durch die äußere Seitenwand führende Öffnung (18) zum Eintauchen und Einrasten eines an die schwenkbare, andere Klemmbacke (14) angesetzten Querstegs (16) besitzt.

5. Meßbecher nach Anspruch 3 oder 4, dadurch gekennzeichnet, daß die schwenkbare Klemmbacke (14) seitlich über die Außenwände der angrenzenden Kammer (21) übergreifende, insbesondere gezahnte Randstreifen (24) besitzt.

6. Meßbecher nach einem oder mehreren der Ansprüche 3 bis 5, gekennzeichnet durch eine ein Ineinanderstapeln ermöglichende Formgebung der Kammern (21, 22) mit angesetzter schwenkbarer Backe (14).

## Claims

1. Measuring beaker in the form of a bag closure which consists of a clamp (12), to be placed on the gathered bag neck, with two clamping cheeks (13, 14), which are held together by a hinge (4) at a narrow side of the clamp and to be moved each towards the other in the manner of pliers, wherein the clamping cheeks (13, 14) at a spacing from the hinge (4) display a detent (17, 18), which catches on the closing of the clamp (12) and is to be opened by pressure in a direction extending about perpendicularly to the opening direction (11), characterised thereby, that one or both cheeks (13, 14) are constructed as metering bowls, in particular with predetermined metering volume, wherein the chamber (21) equipped with the opening (18) for the transverse web (16) possesses such a width and depth that a finger of a child up to about four years of age does not reach the transverse web (16), which in the closed state projects into the chamber (21), but the transverse web (16) is to be actuated or released or pressed down by a finger of a hand of an adult.

2. Measuring beaker according to claim 1, characterised thereby, that the one clamping cheek is constructed as bowl and the other as associated handle.

3. Measuring beaker according to claim 1 or 2, characterised thereby, that the outside of the one, fixed clamping cheek (13) forms a side wall part of a measuring beaker (12) and that the hinge (4) is put on the measuring beaker (12) in the region of an edge of the beaker opening (25).

4. Measuring beaker according to claim 3, characterised thereby, that the measuring beaker (12) displays two chambers (21, 22) divided by a separating wall (20) extending about parallelly to the side wall constructed as fixed clamping cheek (13) and that the chamber (21), in particular the smaller one, adjoining the fixed clamping cheek (13) possesses an opening (18) leading through the outer side wall in the bottom region and for entering and detenting of a transverse web (16) put on the pivotable other clamping cheek (14).

5. Measuring beaker according to claim 3 or 4, characterised thereby, that the pivotable clamping cheek (14) possesses rim strips (24), in particular toothed ones, engaging laterally over the outside walls of the adjoining chamber (21).

6. Measuring beaker according to one or more of the claims 3 to 5, characterised by a shaping of the chambers (21, 22), which makes an intercalated stacking possible, with pivotable cheek (14) put on.

## Revendications

1. Gobelet gradué formant fermeture de sachet, laquelle est constituée d'une pince (12) à poser sur le col resserré sur lui-même du sachet, munie de deux mâchoires de serrage (13, 14) pouvant se déplacer l'une par rapport à l'autre à la façon d'une tenaille et maintenues assemblées par une charnière (4) sur un côté étroit de la pince, ces mâchoires de serrage (13, 14) présentant, écarté de la charnière (4), un arrêt (17, 18) se verrouillant lors de la fermeture de la pince et pouvant être ouvert par pression dans une direction sensiblement perpendiculaire à la direction d'ouverture (11), ce gobelet étant caractérisé par le fait que l'une des mâchoires (13, 14) ou l'ensemble des deux est conçu sous forme de chambres de dosage, en particulier à volume de dosage déterminé, la chambre (21) étant pourvue d'une ouverture (18) destinée à la patte transversale (16) portant l'arrêt (17) et présentant une largeur et une profondeur telles qu'un doigt d'un enfant âgé d'environ quatre ans ne puisse pas atteindre la patte transversale (16) pénétrant dans cette chambre (21) en position de fermeture, mais de façon que cette patte transversale (16) puisse être actionnée, déclenchée ou poussée vers le bas par un doigt d'une main d'adulte.

2. Gobelet gradué selon la revendication 1, caractérisé par le fait que l'une des mâchoires de serrage est conçue sous forme d'une gouttière et l'autre d'une poignée de forme correspondant à cette dernière.

3. Gobelet gradué selon l'une ou l'autre des revendications 1 ou 2, caractérisé par le fait que le côté extérieur de l'une des mâchoires de serrage fixe (13) forme une partie de la paroi latérale du gobelet gradué (12) et que la charnière (4) est adjointe à ce dernier dans la zone d'un bord de son ouverture (23).

4. Gobelet gradué selon la revendication 3, caractérisé par le fait qu'il comporte deux chambres (21, 22) séparées par une cloison (20) dirigée à peu près parallèlement à la paroi latérale conçue sous forme de mâchoire de serrage fixe (13) et que la chambre, en particulier plus petite (21), adjacente à cette mâchoire de serrage fixe (13), est pourvue, dans la zone de son fond, d'une ouverture (18) traversant sa paroi latérale extérieure et adaptée pour permettre l'enfoncement et l'arrêt de la patte transversale (16) adjointe à l'autre mâchoire de serrage pivotante (14).

5. Gobelet gradué selon l'une ou l'autre des revendications 3 ou 4, caractérisé par le fait que la mâchoire de serrage pivotante (14) comporte des bandes marginales (24), en particulier dentées, s'appliquant latéralement de part et d'autre sur les parois extérieures de la chambre adjacente (21).

6. Gobelet gradué selon l'une quelconque des revendications 3 à 5, caractérisé par le fait que la forme des chambres (21, 22) est adaptée pour permettre l'empilage de plusieurs gobelets les uns dans les autres, avec leur mâchoire pivotante (14) adjointe en position de fermeture.

FIG. 1

FIG. 2

FIG. 3

22 20 21 24

13

14

A ↓    ↓ B

FIG. 5

12

19

FIG. 4

13

16 17

14

19

12

24

FIG. 6

FIG. 7